# DEMANDE DE BREVET EUROPEEN

(11) **EP 0 677 673 A1**
(43) Date de publication de la demande: **18.10.1995**
(21) Numéro de dépôt: 95400586.4
(22) Date de dépôt: 17.03.1995
(51) Int. Cl.: F16C 33/76

(54) **Roulement équipé d'un dispositif d'étanchéité mécanique**

(30) Priorité: 12.04.1994 FR 9404284
(71) Demandeur: SNR ROULEMENTS, F-74010 Annecy Cédex (FR)
(72) Inventeur: Faramaz, Michel, F-74290 Menthon St Bernard (FR)
(74) Mandataire: Ernst-Schonberg, Michel

(57) **Abrégé**

Roulement équipé d'un dispositif d'étanchéité mécanique, dans lequel une surface d'étanchéité est formée par les faces de glissement mutuel de deux anneaux d'étanchéité (26, 26') sollicités élastiquement l'un vers l'autre par deux bagues toriques (27, 27') en appui élastique sur des portées extérieures (28, 28') coniques desdits anneaux (26, 26') et sur des portées intérieures (29, 29') formées dans des chambres annulaires (24, 25) localisées sur des éléments porteurs respectivement solidaires des bagues (12, 13) eu roulement, caractérisé par le fait que la bague intérieure (12) et la bague extérieure (13) du roulement, se prolongent radialement par des brides de fixation (14, 15) sur lesquelles sont formées les chambres annulaires (24, 25) de réception des anneaux d'étanchéité (26, 26').

## Description

L'invention concerne un roulement équipé d'un dispositif d'étanchéité mécanique dans lequel une surface d'étanchéité est formée par les faces de glissement mutuel de deux anneaux d'étanchéité sollicités élastiquement l'un vers l'autre par deux bagues toriques en appui élastique sur des portées extérieures coniques des anneaux et sur des portées intérieures formées dans des chambres annulaires localisées sur des éléments porteurs respectivement solidaires des bagues du roulement.

La publication FR-A-2527716 décrit un roulement dont les bagues sont bloquées dans des corps annulaires au moyen de brides de réception d'organes du dispositif d'étanchéité mécanique.

Le dispositif d'étanchéité est alors axialement décalé par rapport au roulement et doit être spécialement intégré au montage d'application qui utilise ledit roulement.

Pour remédier à cet inconvénient l'invention se propose de réaliser un roulement préassemblé graissé et équipé d'un dispositif d'étanchéité mécanique du type prédéfini dont l'encombrement et le nombre réduit de pièces le rendent particulièrement économique.

Selon l'invention, la bague intérieure et la bague extérieure du roulement se prolongent radialement par des brides de fixation sur lesquelles sont formées les chambres annulaires de réception des anneaux d'étanchéité.

Selon une autre caractéristique de l'invention, les chambres annulaires de réception des anneaux d'étanchéité entourent les chemins de guidage des corps roulants, localisés sur des extensions axiales concentriques aux brides de fixation du roulement et orientées en sens contraire l'une de l'autre.

D'autres caractéristiques et avantages de l'invention apparaîtront à la lecture de la description d'un exemple de réalisation du roulement en référence au dessin annexé dans lequel :

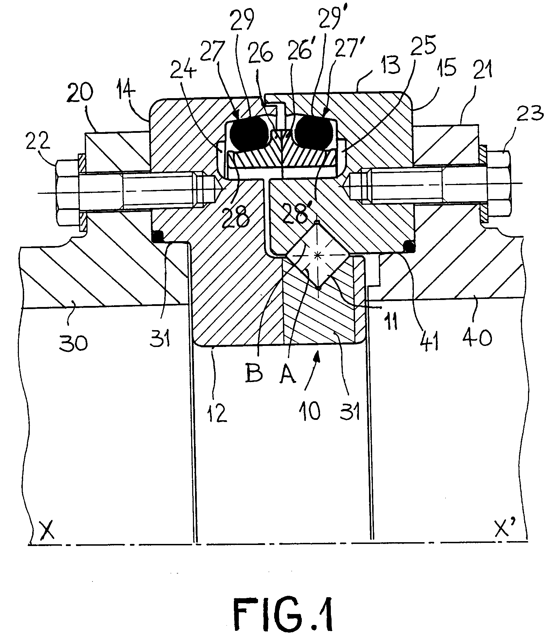

- la figure 1 est une demie-vue en coupe axiale d'un roulement à rouleaux équipé du dispositif d'étanchéité mécanique.

La figure représente un roulement 10 connu en soi par la publication FR-A-1165068 comportant une rangée de corps roulants à deux séries de rouleaux 11 dont les axes de rotation A-B sont alternativement inclinés en sens contraires par rapport à l'axe XX' du roulement.

L'agencement des rouleaux ainsi répartis est tel que le roulement puisse résister non seulement aux charges radiales mais également aux poussées axiales suivant les deux directions opposées de l'axe XX'.

Le roulement 10 possède une bague intérieure 12 et une bague extérieure 13 respectivement constituées par les extensions axiales de deux brides de fixation 14, 15 solidaires de deux flasques 20,21 portés par des arbres 30, 40 au moyen de vis 22, 23 réparties à la périphérie des flasques 20, 21.

Les arbres 30, 40 se prolongent axialement par des portées de centrage 31, 41 des bagues 12, 13.

Selon l'invention les bagues intérieure 12 et extérieure 13 sont prolongées radialement respectivement par les brides de fixation 14, 15, auxquelles sont intégrées des chambres annulaires 24, 25.

Les chambres annulaires 24, 25 ainsi localisées dans les brides de fixation porteuses 14, 15 contiennent le dispositif d'étanchéité mécanique connu en soi par la publication FR-A-2527716. Celui-ci est principalement constitué par deux anneaux 26, 26' à surfaces d'étanchéité radiales de glissement qui sont sollicitées élastiquement l'une vers l'autre par deux bagues toriques 27, 27'. A cet effet les bagues 27, 27' sont en appui élastique sur des portées extérieures coniques 28, 28' des anneaux 26, 26'. D'une manière analogue, les chambres annulaires 24, 25 possèdent également des portées intérieures coniques 29, 29'. Cet agencement montre d'une part que la bague 27 assure l'entraînement de l'anneau 26 par la bague 12 du roulement et par l'arbre 30 et d'autre part que la bague 27' assure l'entraînement de l'anneau 26' par la bague 13 du roulement et par l'arbre 40.

Les chambres annulaires 24, 25 entourent avantageusement les chemins de guidage des corps roulants 11. Ceux-ci sont ici constitués par des gorges à section en V dont les faces latérales assurent le guidage des rouleaux. Les chemins de guidage sont plus particulièrement localisés sur des extensions axiales concentriques raccordées aux brides de fixation 14, 15 et orientées en sens contraire l'une de l'autre.

Le montage du dispositif d'étanchéité entre les bagues intérieure 12 et extérieure 13 s'opère avant la mise en place des rouleaux 11. Ces derniers sont introduits au contact des chemins de guidage au travers de la bague intérieure 12. A cet effet cette dernière possède un orifice de montage qui reçoit un obturateur 31 à la suite de l'introduction des rouleaux 11.

Le roulement ainsi réalisé est indémontable et prêt à être incorporé dans un montage d'application ainsi que cela a été décrit.

## Revendications

**1)** Roulement équipé d'un dispositif d'étanchéité mécanique, dans lequel une surface d'étanchéité est formée par les faces de glissement mutuel de deux anneaux d'étanchéité (26, 26') sollicités élastiquement l'un vers l'autre par deux bagues toriques (27, 27') en appui élastique sur des portées extérieures (28, 28') coniques desdits anneaux (26, 26') et sur des portées intérieures (29, 29') formées dans des chambres annulaires (24, 25) localisées sur des éléments porteurs respectivement solidaires des bagues (12, 13) du roulement, caractérisé par le fait que la bague intérieure (12) et la bague extérieure (13) du roulement, se prolongent radialement par des brides de fixation (14, 15) sur lesquelles sont formées les chambres annulaires (24, 25) de réception des anneaux d'étanchéité (26, 26') et que lesdites chambres annulaires (24, 25) entourent les chemins de guidage des corps roulants (11) localisés sur des extensions axiales concentriques des brides de fixation (14, 15) du roulement et orientées en sens contraire l'une de l'autre.
